Europäisches Patentamt

European Patent Office

Office européen des brevets

(19)

(11) Veröffentlichungsnummer: **0 232 535 B1**

## (12) EUROPÄISCHE PATENTSCHRIFT

(45) Veröffentlichungstag der Patentschrift: **18.09.91**

(21) Anmeldenummer: **86117912.5**

(22) Anmeldetag: **22.12.86**

(51) Int. Cl.⁵: **G01G 19/07**, G01B 7/24, G01G 19/12, G01G 3/15, G01L 1/14

(54) **Halteeinrichtung zur Halterung eines elektrischen Wandlers.**

(30) Priorität: **08.02.86 DE 3604030**

(43) Veröffentlichungstag der Anmeldung:
**19.08.87 Patentblatt 87/34**

(45) Bekanntmachung des Hinweises auf die Patenterteilung:
**18.09.91 Patentblatt 91/38**

(84) Benannte Vertragsstaaten:
**DE ES FR GB IT NL**

(56) Entgegenhaltungen:
**EP-A- 0 026 446**
**FR-A- 2 545 170**
**GB-A- 1 195 102**
**US-A- 3 521 484**
**US-A- 3 975 685**

(73) Patentinhaber: **VDO Adolf Schindling AG**
**Gräfstrasse 103**
**W-6000 Frankfurt/Main 90(DE)**

(72) Erfinder: **Kister, Horst**
**Am Hebestumpf 58**
**W-6293 Wehrheim(DE)**
Erfinder: **Schult, Klaus**
**Deuil-la Barre Strasse 16**
**W-6000 Frankfurt/M. 56(DE)**
Erfinder: **Schwab, Jean-Francois**
**Feldbergstrasse 44**
**W-6384 Schmitten 3(DE)**
Erfinder: **Patzig, Hans-Norbert**
**Auf der Nachtweide 3**
**W-6380 Bad Homburg v. d. H. 6(DE)**
Erfinder: **Quenzer, Michael, Dr.**
**Bonameser Strasse 41**
**W-6000 Frankfurt/M. 50(DE)**

(74) Vertreter: **Klein, Thomas, Dipl.-Ing. (FH)**
**Sodener Strasse 9 Postfach 6140**
**W-6231 Schwalbach a. Ts.(DE)**

**Beschreibung**

Die Erfindung bezieht sich auf eine Halteeinrichtung gemäß Oberbegriff Anspruch 1 (US-A-3521484).

Schubspannungsmesser sind aus dem US-Patent 42 69 070 bekannt. Sie dienen dazu, in eine Achse eines Flugzeugs eingebaut zu werden, um dort die Verformung der Achse zu erfassen. Die dabei erfaßten Werte werden zur Bestimmung des Gewichts und des Schwerpunkts des Flugzeugs benötigt. Damit kann insbesondere eine optimale Beladung erfolgen.

Aufgabe der Erfindung ist es, eine Halteeinrichtung nach dem Oberbegriff zu schaffen, die bei einfachem Aufbau leicht einbaubar und auf unkomplizierte Weise justierbar ist.

Diese Aufgabe wird gemäß Anspruch 1 gelöst.

Die zur Befestigung dienenden Trägerteile sind vorzugsweise an den Halteringen angeformt, so daß sie ohne große Toleranzprobleme zusammen mit den Halteringen bearbeitet werden können.

Spulenteil und/oder Scheibenteil können so auf günstige Weise mittels einer Schraubenbefestigung am Haltering befestigbar sein.

Um vor Befestigung des Wandlers an den bereits separat in das rohrförmige Bauteil eingebauten Halteringen eine Vormontage durchführen zu können, sind Spulenteil und/oder Scheibenteil an einem mit dem Haltering verbindbaren Trägerelement befestigbar. Ist am Haltering eine sich quer zur Längserstreckung des rohrförmigen Bauteils erstreckende Führungsnut ausgebildet, in die ein entsprechend ausgebildeter Führungsansatz des Trägerelements eingreifbar ist, so erfolgt dadurch bei der Befestigung des Trägerelements an dem bereits eingebauten Haltering bereits eine weitgehende Justage.

Vorzugsweise besitzen dazu Führungsnut und Führungsansatz einen V-förmigen Querschnitt.

Weist der Führungsansatz einen axialen, zum Boden der Führungsnut nach außen mündenden Schlitz auf, so kann der Führungsansatz sich unter Überwindung der Herstellungstoleranzen der Führungsnut anpassen.

Die Führungsnuten erstrecken sich vorzugsweise in einer zur Längsachse des rohrförmigen Bauteils parallelen Ebene, wobei diese Ebene sich möglichst vertikal erstreckt. Dadurch kann der Wandler durch Verschieben der Trägerelemente in den Führungsnuten mit seiner Längserstreckung genau in die horizontal verlaufende neutrale Biegeebene des rohrförmigen Bauelements justiert werden.

Zur Befestigung des Trägerelements kann an diesem eine axial zur Längsachse des rohrförmigen Bauteils sich erstreckende Ausnehmung von einer Befestigungsschraube durchragbar sein, die in eine Gewindebohrung des Halterings einschraubbar ist.

Ist dabei die Ausnehmung eine Bohrung größeren Durchmessers als dem Außendurchmesser der Befestigungsschraube, so kann zur Justage das Trägerelement noch verschoben werden.

Vorzugsweise ist dabei die Ausnehmung ein Langloch mit gleicher Erstreckungsrichtung wie die Führungsnut.

Eine Justage durch vertikales Verschieben eines Trägerelements in die neutrale Biegeebene ist auf einfache Weise dadurch möglich, daß das Trägerelement auf der dem Führungsansatz abgewandten Seite im Bereich der Ausnehmung sich quer zur Erstreckung des Führungsansatzes erstreckende Anschläge besitzt. Wird auf den Schraubenkopf der bereits bis zum Anschlag aufgeschraubten Befestigungsschraube ein rohrförmigen Werkzeug aufgesteckt, dessen Außenkontur exzentrisch ausgebildet und an den Anschlägen in Anlage ist, so erfolgt durch Verdrehen dieses Werkzeuges eine Verschiebung des Trägerelements.

Um die Trägerelemente nach bereits erfolgter Montage der Halteringe problemlos montieren zu können, sind die Trägerelemente beider Halteringe an den einer eine Montageöffnung bildenden Mündungsöffnung des rohrförmigen Bauteils zugewandten Stirnseiten der Halteringe angeordnet.

Besonders günstig ist es dazu, wenn die Gewindebohrung des der Montageöffnung näheren Halterings eine Durchgangsbohrung ist, deren Innendurchmesser größer ist als der größte Außendurchmesser eines Schraubenschlüssels durch den die Befestigungsschraube des der Montageöffnung entfernteren Halterings schraubbar ist. Diese Ausbildung ermöglicht es auf einfache Weise von der Montageöffnung her die Trägerelemente festzuschrauben, indem zuerst die der Montageöffnung entfernte Befestigungsschraube mittels eines durch die Durchgangsbohrung der Montageöffnung näheren Halterings hindurchreichenden Schraubenschlüssels festgeschraubt wird. Anschließend wird ebenfalls von der Montageöffnung aus die Befestigungsschraube an dem der Montageöffnung näheren Haltering festgeschraubt.

Als Befestigungsschrauben besonders geeignet sind dazu Innensechskantschrauben.

Besitzen die Halteringe mindestens zwei Halteansätze, die sich diametral gegenüberliegend angeordnet sind, wobei die Halteansätze um etwa 90° zu dem Trägerteilen versetzt angeordnet sind, so ist die Lage der Halteringe in dem rohrförmigen Bauteil auf einfache Weise eindeutig definiert.

Eine Lageverschiebung der Halteringe durch die zu erfassende Verbiegung des rohrförmigen Bauteils wird dadurch vermieden, daß die Halteansätze Stege geringer axialer Erstreckung sind.

Beiden Halteeinrichtungen kann eine Spannvorrichtung Verwendung finden - Anspruch 13. Dabei sind vorzugsweise die Spannbacken parallel zueinander bewegbar.

Um eine symmetrische Kraftbeaufschlagung an den Greifansätzen zu erhalten, kann zwischen zwei gleichsinnig bewegbaren Spannbacken ein gegenläufig bewegbarer Spannbacken angeordnet sein.

Sind zwei eine Baueinheit bildende synchron bewegbare Spannvorrichtungen in einem dem axialen Abstand der Halteringe entsprechenden Abstand ihrer Spannbacken angeordnet, so können beide Halteringe gleichzeitig in das rohrförmige Bauteil eingebaut werden.

Damit der Einbau der Halteringe auf einfache Weise in dem richtigen Abstand zur Montageöffnung des rohrförmigen Bauteils erfolgen kann, kann die Baueinheit einen die Einführbewegung der Baueinheit in das rohrförmige Bauteil begrenzenden Anschlag aufweisen.

Damit die Halteringe in zueinander korrekter Lage in das rohrförmige Bauteil eingebaut werden können, kann eine Einbaulehre Verwendung finden - Anspruch 18. Dazu weist die Einbaulehre vorzugsweise zwei miteinander verbundene Befestigungsansätze auf, die an den der Montageöffnung des rohrförmigen Bauteils zugewandten Seiten der Halteringe lösbar befestigbar sind. Vorzugsweise ist die Einbaulehre an zwei axial einander zugeordneten Trägerteilen der Halteringe befestigbar.

Ist die Einbaulehre mit den Führungsansätzen der Trägerelemente entsprechenden Führungsansätzen versehen und mittels in die Gewindebohrungen der Halteringe einschraubbaren Befestigungsschrauben an den Halteringen befestigbar, so kann auf die gleiche Weise, wie die Montage der Trägerelemente erfolgt, eine Demontage der Einbaulehre nach dem Einsetzen der Halteringe erfolgen.

Besonders einfach ist ein korrekter Einbau, wenn die Montageeinheit auf der Baueinheit anordenbar ist und mit dieser in das rohrförmige Bauteil einführbar ist.

Ein Ausführungsbeispiel der Erfindung ist in der Zeichnung dargestellt und wird im folgenden näher beschrieben. Es zeigen

| Figur 1 | einen Querschnitt durch eine Ansicht einer Flugzeugachse, |
| Figur 1a | einen Querschnitt durch eine Draufsicht der Flugzeugachse nach Figur 1, |
| Figur 2 | eine Ansicht eines äußeren Halterings, |
| Figur 2a | eine Seitenansicht im Schnitt des Halterings nach Figur 2, |
| Figur 2b | eine Rückansicht des Halterings nach Figur 2, |
| Figur 2c | eine Draufsicht im Schnitt des Halterings nach Figur 2, |
| Figur 3 | eine Ansicht eines inneren Halterings, |
| Figur 3a | eine Seitenansicht im Schnitt des Halterings nach Figur 3, |
| Figur 3b | eine Rückansicht des Halterings nach Figur 3, |
| Figur 3c | eine Draufsicht im Schnitt des Halterings nach Figur 3, |
| Figur 4 | eine Ansicht eines äußeren Trägerelements, |
| Figur 4a | eine Draufsicht des Trägerelements nach Figur 4, |
| Figur 4b | eine Rückansicht des Trägerelements nach Figur 4 |
| Figur 4c | einen vergrößerten Ausschnitt des Trägerelements nach Figur 4a, |
| Figur 5 | eine Ansicht eines inneren Trägerelements, |
| Figur 5a | eine Draufsicht des Trägerelements nach Figur 5, |
| Figur 5b | eine Rückansicht des Trägerelements nach Figur 5, |
| Figur 5c | einen vergrößerten Ausschnitt des Trägerelements nach Figur 5a, |
| Figur 6 | eine Ansicht einer Halteeinrichtung mit Widerstandsmessern im Halbschnitt, |
| Figur 6a | eine Ansicht der Halteeinrichtung nach Figur 6, |
| Figur 6b | eine Vorderansicht der Halteeinrichtung nach Figur 6a, |
| Figur 6c | eine Rückansicht der Halteeinrichtung nach Figur 6a, |
| Figur 7 | eine Montageeinheit aus Einbaulehren und Halteringen im Halbschnitt, |
| Figur 8 | ein Justierwerkzeug in der Ansicht, |
| Figur 8a | das Justierwerkzeug nach Figur 8 in der Draufsicht, |
| Figur 8b | eine vergrößerte Schnittansicht des Kopfes des Justierwerkzeugs nach Figur 8, |
| Figur 8c | eine Draufsicht des Kopfes nach Figur 8b, |
| Figur 9 | eine Ansicht eines Kabelführungsringes, |
| Figur 9a | eine Seitenansicht des Kabelführungsringes nach Figur 9 im Schnitt, |
| Figur 10 | eine perspektivische Ansicht einer Spannvorrichtung, |
| Figur 11 | eine Seitenansicht eines Schubspannungsmessers. |

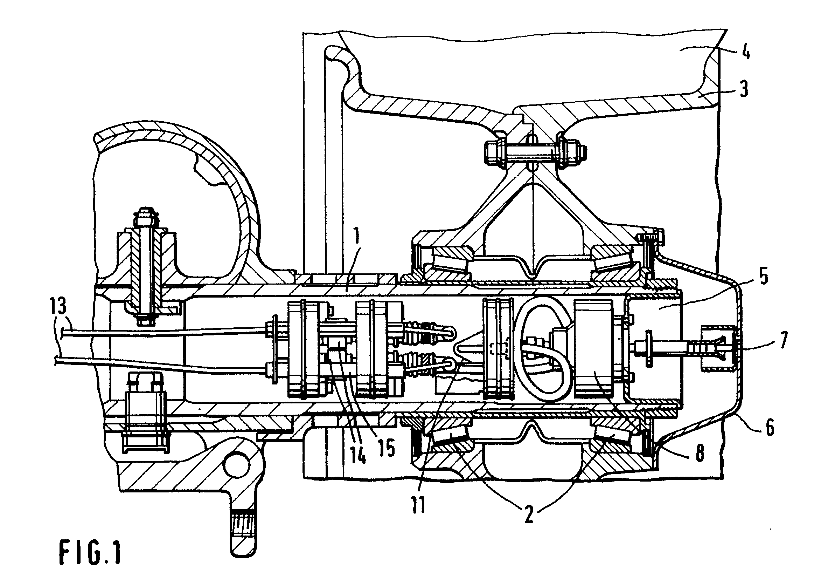

In den Figuren 1 und 1a ist eine Hälfte einer Flugzeugachse 1 für das Bugrad eines Flugzeugs dargestellt. Auf dieser rohrförmigen Flugzeugachse ist über Wälzlager 2 die Felge 3 eines Rades 4 drehbar gelagert. An der äußeren Stirnseite der Felge 3 ist eine die äußere Mündungsöffnung 5 überdeckende Antriebskappe 6 befestigt, die einen koaxial in die Führungsachse 1 ragenden Antriebszapfen 7 aufweist. Durch diesen Antriebszapfen 7 ist ein drehfest in der Flugzeugachse 1 angeordneter Tachogenerator 8 antreibbar.

Das Anschlußkabel 9 des Tachogenerators 8 ist durch einen Kabelführungsring 10 und ein von diesem getragenes Schutzblech 11 daran gehindert, sich unkontrolliert an eine zum inneren Bereich der Flugzeugachse 1 neben dem Kabelführungsring 10 angeordnete Schubspannungsmeßanordnung anzulegen und deren Meßwerte zu beeinflussen.

Sowohl durch die Führung des Kabelführungsrings 10 als auch durch ein axial durch die Schubspannungsmeßanordnung hindurchgeführtes Führungsrohr 12 ist das Anschlußkabel zum mittleren Bereich der Flugzeugachse 1 geführt, ohne daß es zu einer Beeinflussung der Meßwerte der Schubspannungsmeßanordnung kommen kann.

Auf die gleiche Weise sind die Anschlußkabel 13 der Schubspannungsmesser 14 der Schubspannungsmeßanordnung durch diese axial durchragende Schutzrohre 15 zum Inneren der Flugzeugachse 1 geführt.

Die Schubspannungsmesser 14 sind mittels eines der Mündungsöffnung 5 näheren Halterings 16 und eines im bestimmten Abstand dazu der Mündungsöffnung 5 entfernteren Halterings 17 in der Flugzeugachse 1 gehalten. Die beiden Schubspannungsmesser 14 erstrecken sich nebeneinander axial in der horizontalen neutralen Biegeebene der Flugzeugachse 1, so daß sie bei unbelastetem Fahrwerk aus ihrer Nullstellung nicht vertikal ausgelenkt sind.

In Figur 11 ist ein derartiger Schubspannungsmesser 14 dargestellt. Er besteht aus einem am Haltering 16 befestigbaren Spulenteil 18, mit zwei im Abstand zueinander angeordneten Magnetspulen 19 und einem Scheibenteil 20, das eine in unbelasteter Normallage äquidistant zwischen die Magnetspulen 19 ragende Scheibe 21 aufweist. Das Spulenteil 18 besitzt auch einen Kabelanschluß 22 zum Anschließen des Anschlußkabels 13.

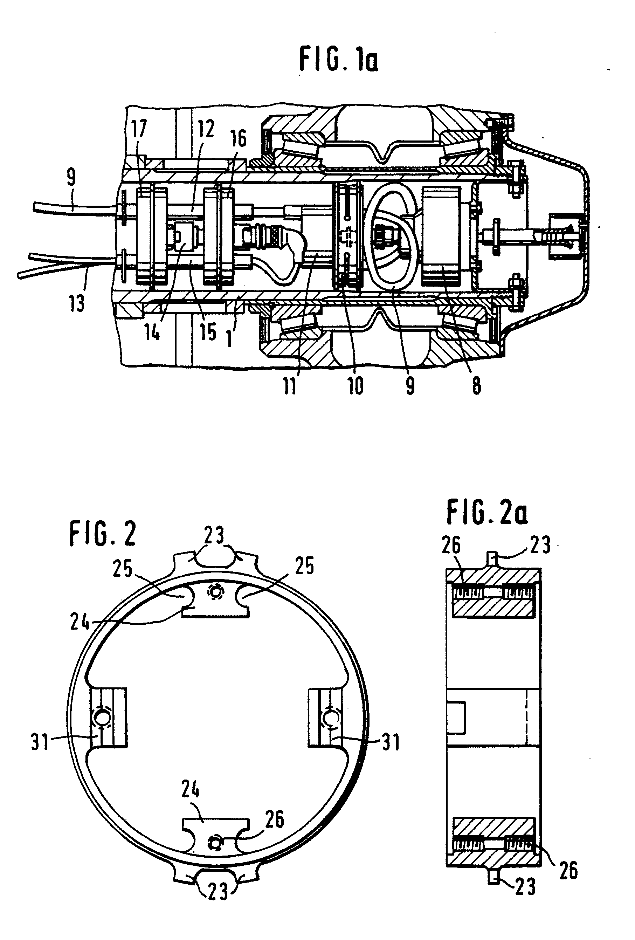

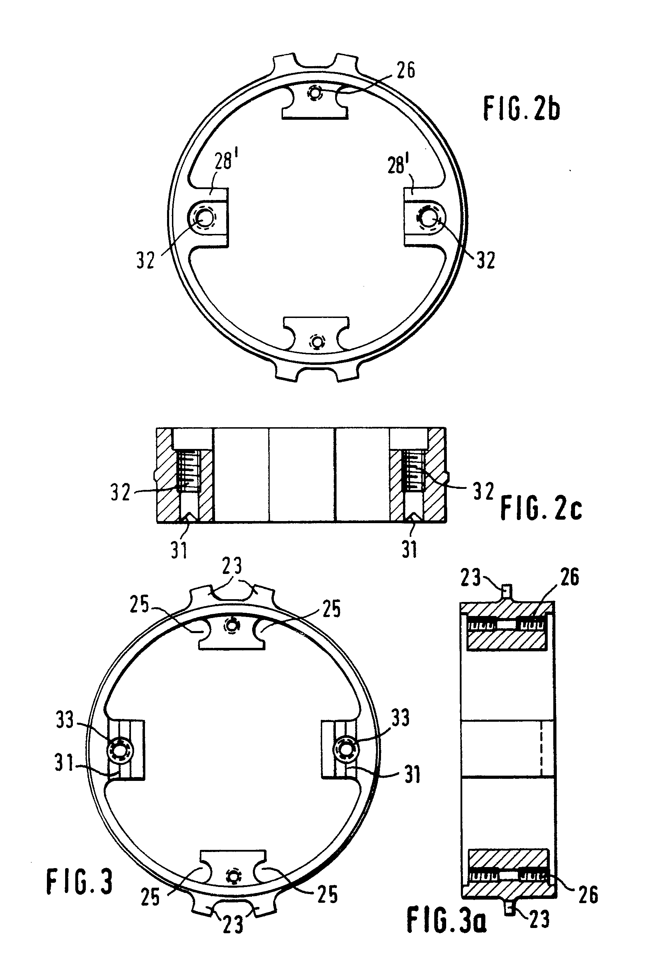

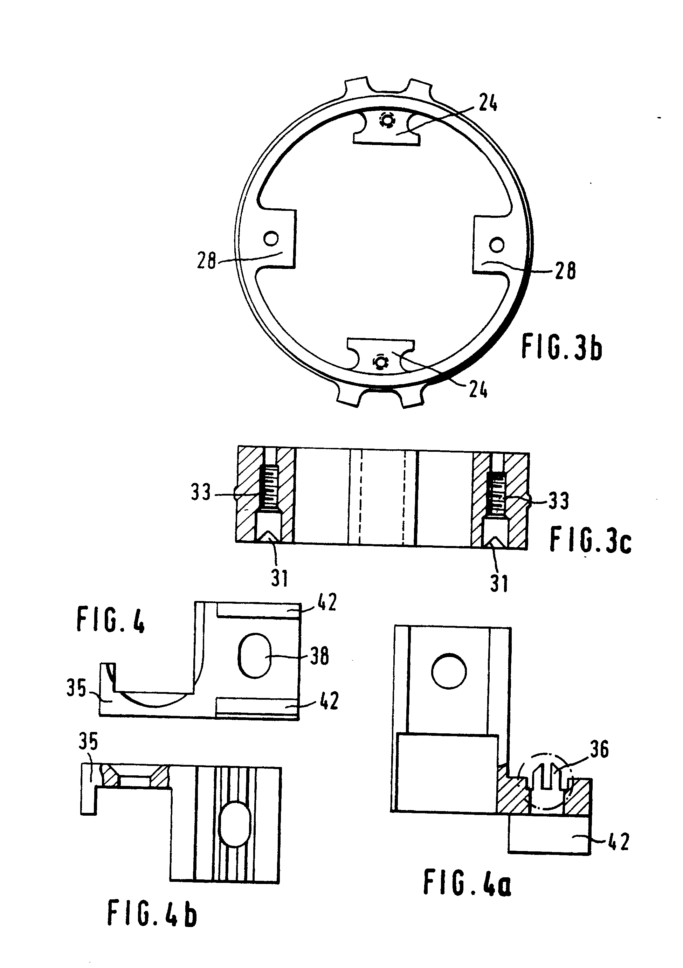

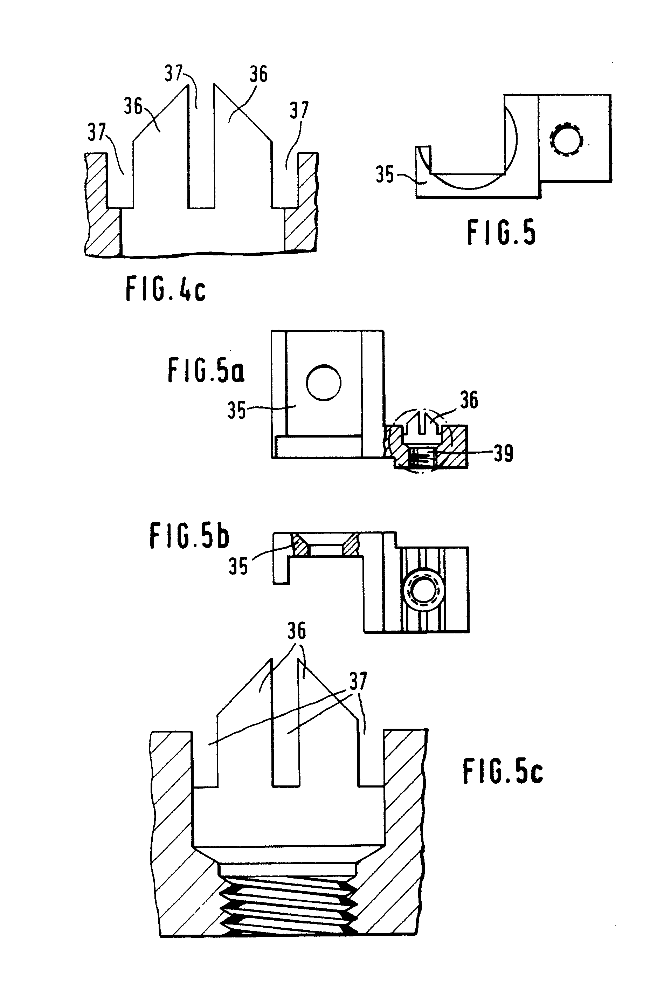

Der Haltering 16 ist in den Figuren 2 bis 2c und der Haltering 17 in den Figuren 3 bis 3c vergrößert dargestellt.

Beide Halteringe 16 und 17 sind radial federnd und besitzen radial hervorstehende Halteansätze 23. Diese sind in zwei sich vertikal diametral gegenüberliegenden Gruppen zu jeweils zwei Halteansätzen 23 angeordnet. Sie sind durch Stege geringer axialer Erstreckung gebildet. Der Durchmesser über die Halteansätze 23 gemessen, ist etwas größer als der Innendurchmesser der Flugzeugachse, so daß die die Schubspannungsmesser 14 tragenden Halteringe 16 und 17 unter federnder Vorspannung in der Flugzeugachse 1 gehalten sind.

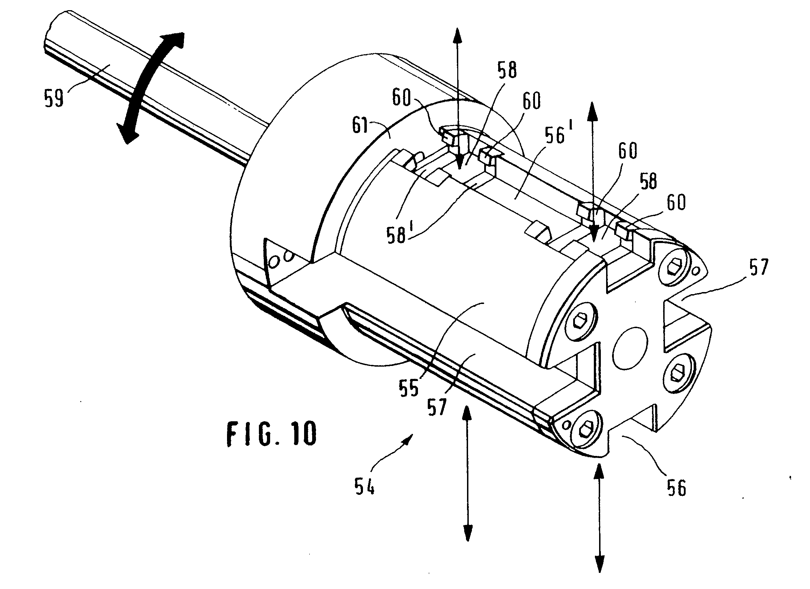

Radial nach innen gerichtet und sich gegenüberliegend besitzen die Halteringe 16 und 17 im Bereich der Halteansätze 23 angeformte Greifansätze 24 mit hintergreifbaren Ausnehmungen 25. Diese Ausnehmungen 25 sind durch Spannbacken einer Spannvorrichtung, wie sie in Figur 10 dargestellt ist, hintergreifbar und so die Halteringe 16 und 17 zum Einsetzen in die Flugzeugachse elastisch radial nach innen verformbar.

In den Greifansätzen 24 sind ferner axiale Gewindebohrungen 26 zum Befestigen von das Führungsrohr 12 sowie die Schutzrohre 15 tragenden Halteblechen.

Um 90° versetzt zu den Halteansätzen 23 besitzen die Halteringe 16 und 17 ebenfalls radial nach innen gerichtete angeformte Trägerteile 28 und 28'. An diesen Trägerteilen 28 und 28' sind durch Schraubbefestigungen Trägerelemente 29 und 30, wie sie in den Figuren 4 bis 4c und 5 bis 5c dargestellt sind befestigbar, welche wiederum die Spulenteile 18 und Scheibenteile 20 tragen.

Die Trägerteile 28 und 28' weisen an ihren der Mündungsöffnung 5 zugewandten Seiten Führungsnuten 31 V-förmigen Querschnitts auf, die sich vertikal quer zur Längserstreckung der Flugzeugachse 1 erstrecken.

Weiterhin sind die Trägerteile 28 und 28' mit durchgehenden Gewindebohrungen 32 und 33 versehen, die axial zur Flugzeugachse 1 und mittig zu den Führungsnuten 31 ausgebildet sind. Dabei ist der Innendurchmesser der Gewindebohrung 32 so groß, daß von der Mündungsöffnung 5 her ein Schraubenschlüssel, insbesondere ein Innensechskantschlüssel zum Befestigen oder Lösen der die Trägerelemente 30 am Trägerteil 28 befestigenden Innensechskantschrauben 34 durch die Gewindebohrung 32 hindurchführbar ist.

Die Trägerelemente 29 und 30 besitzen Halteböcke 35, an denen bereits vor Einbau in die bereits in der Flugzeugachse 1 eingesetzten Halteringe 16 und 17, die Spulenteile 18 bzw. die Scheibenteile 20 in ihrer korrekten Lage festschraubbar sind.

An ihren im Bereich der Führungsnuten 31 mit den Trägerteilen 28 und 28' verbindbaren Bereichen, besitzen die Trägerelemente 29 und 30 entsprechend der Führungsnuten 31 ausgebildete und in diese hineinragende Führungsansätze 36 V-förmigen Querschnitts. Diese Führungsansätze 36 besitzen sowohl mittig als auch an ihren Seitenbereichen sich in Längsrichtung der Führungsansätze 36 erstreckende Schlitze 37, die zum Boden der Führungsnut 31 hin nach außen münden. Dadurch sind die Führungsansätze 36 quer zu ihrer Längserstreckung etwas elastisch und können sich die Herstellungstoleranzen überwindend zentrierend der Führungsnut 31 anpassen.

Durch entsprechend den Gewindebohrungen 32 und 33 der Trägerteile 28 und 28' an den Trägerelementen 29 und 30 ausgebildete Ausnehmungen 38 und 39 sind Befestigungsschrauben 40 und34 zum Festschrauben der Trägerelemente 29 und 30 an den Trägerteilen 28 und 28' hindurchgeführt.

Die Ausnehmungen 38 der Trägerelemente 29 sind als Langloch mit der Längserstreckung der Führungsnuten 31 entsprechender Erstreckung ausgebildet, so daß das das Spulenteil 18 tragende Trägerelement 29 in der Führungsnut 31 verschoben werden kann. Damit kann eine Lagejustierung auf genau koaxiale Lage von Spulenteil 18 und Scheibenteil 20 erfolgen.

Um dies auf einfache Weise von der Mündungsöffnung her bei bereits eingebauten Schubspannungsmessern 14 durchführen zu können, besitzt das Trägerelement 29 auf der dem Führungsansatz abgewandten Seite koaxial zur Ausnehmung 38 verlaufende, sich quer zur Erstreckung des Führungsansatzes erstreckende Anschläge 42.

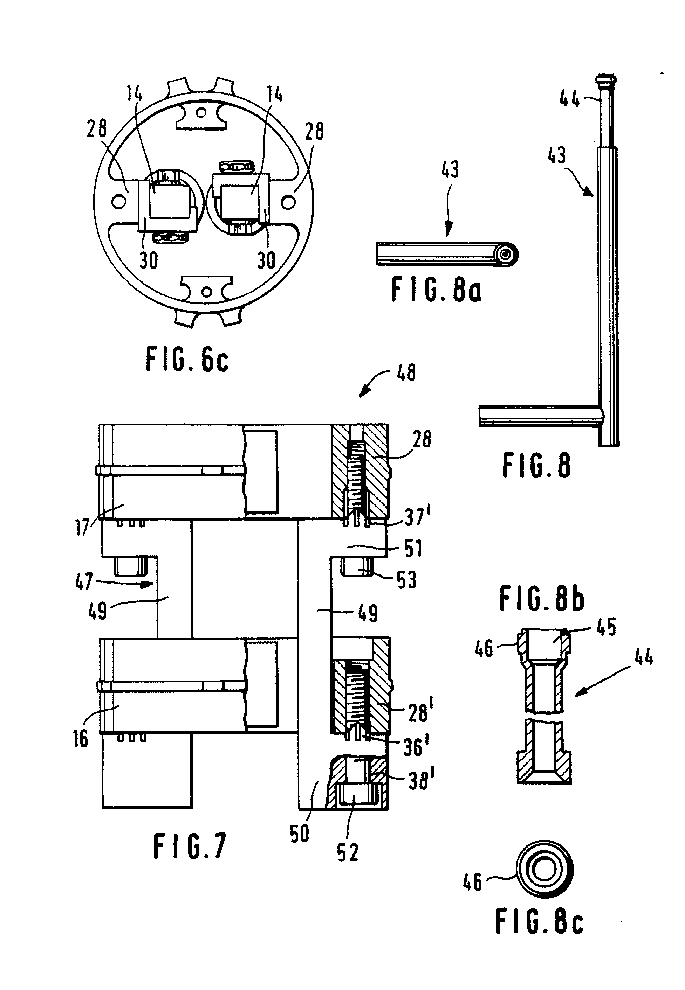

Dazu ist ein Justierwerkzeug 43 geeignet, wie es in den Figuren 8 bis 8c dargestellt ist. Dieses Justierwerkzeug besitzt einen hülsenartigen Kopf 44, dessen Innenbohrung 45 einen dem Kopf der Befestigungsschraube 40 etwa entsprechenden Durchmesser besitzt. Die zylindrische Außenkontur 46 des Kopfes 44 ist exzentrisch zur Innenbohrung 45 und besitzt einen Durchmesser, der etwa dem Abstand der Anschläge 42 entspricht. Durch Aufsetzen des Kopfes 44 auf den Kopf der Befestigungsschraube 40 und Verdrehen des Justierwerkzeugs 43 um seine Längsachse ist das nur leicht angeschraubte Trägerelement 29 in der Führungsnut 31 verschiebbar. Danach erfolgt ein Festschrauben der Befestigungsschraube 40.

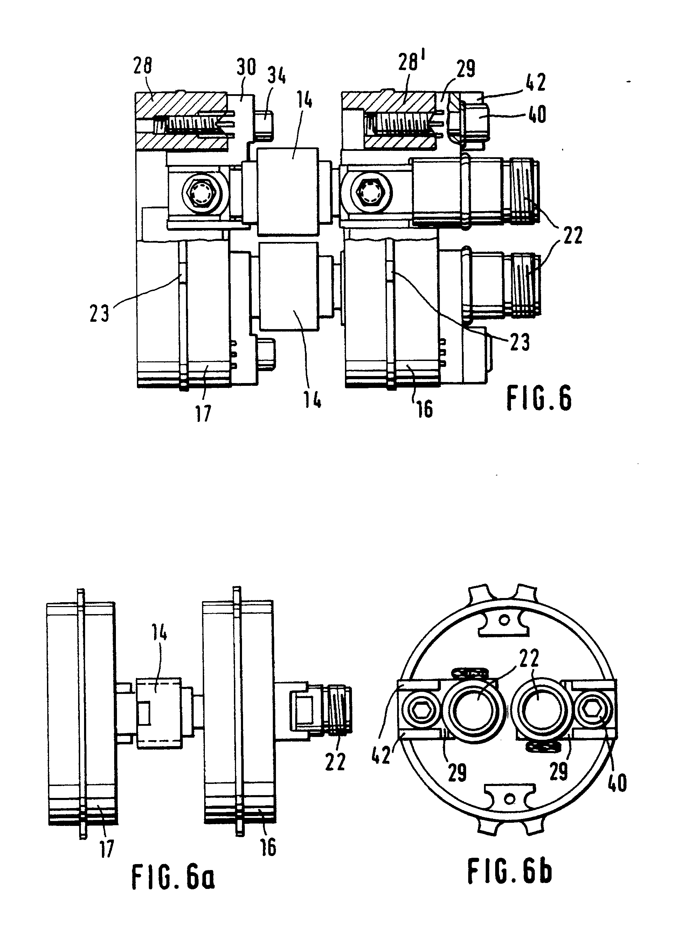

Dieser Zustand,in dem an den Halteringen 16 und 17 die Schubspannungsmesser 14 bereits komplett montiert sind, ist in den Figuren 6 bis 6c dargestellt.

Um die Halteringe 16 und 17 in einwandfreier Lage separat von den Trägerelementen 29 und 30 und den Schubspannungsmessern14 einbauen zu können, werden die Halteringe 16 und 17 mit Einbaulehren 47 zu einer Montageeinheit 48 verbunden, wie sie in Figur 7 dargestellt ist.

Die Einbaulehren 47 besitzen zwei miteinander durch einen die mittige Ausnehmung des Halterings 16 durchragenden Steg 49 verbundene Befestigungsansätze 50 und 51, die an den der Mündungsöffnung 5 der Flugzeugachse 1 zugewandten Seite der Trägerteile 28 und 29 mittels Befestigungsschrauben 52 und 53 befestigbar sind. Die Befestigungsansätze 50 und 51 sind mit den gleichen Führungsansätzen 36', Schlitzen 37' und Ausnehmungen 38' und 39' ausgebildet wie die Trägerelemente 29 und 30 und greifen auch mit den Führungsansätzen 36' in die Führungsnuten 31 ein.

Da auch die Befestigungsschrauben 52 und 53 den Befestigungsschrauben 40 und34 entsprechen, ist eine Demontage der Einbaulehren 47 nach dem Einsetzen der Montageeinheit 48 in die Flugzeugachse 1 möglich. Dies erfolgt zuerst durch Lösen der Befestigungsschrauben 52, dann durch Lösen der Befestigungsschrauben 51 mittels eines durch die Gewindebohrung 32 hindurchgeführten Schraubenschlüssels und anschließender Entnahme der Einbaulehre 47 durch die mittige Ausnehmung des Halterings 16.

Zum Einbau der Montageeinheit 48 in die Flugzeugachse 1 dient die in Figur 10 dargestellte Spannvorrichtung 54. Diese Spannvorrichtung 54 besitzt einen zylindrischen Körper 55, mit zwei rechtwinklig zueinander angeordneten Nutenpaaren von Spannnuten 56 und Führungsnuten 57, die axial verlaufend an der zylindrischen Mantelfläche des Körpers 55 ausgebildet sind. In die Spannnuten 56 ragen die klauenförmig ausgebildeten Enden von Spannbacken 58 und 58'. Im Abstand der Halteringe 16 und 17 sind zwei Gruppen von Spannbacken 58 und 58' aus jeweils drei parallen zueinander radial bewegbaren Spannbacken 58 und 58' angeordnet. Durch einen Drehantrieb 59 sind die inneren Spannbacken 58 gegenläufig zu den äußeren Spannbacken 58' bewegbar. Die Spannbacken 58 besitzen an ihrem in die untere Spannnut 56 ragenden Ende nicht dargestellte Greifhaken 60, während die Spannbacken 58' an ihrem in die obere Spannnut 56' ragenden Ende Greifhaken 60 aufweisen.

Durch seitliches Aufschieben der Montageeinheit 48 auf den zylindrischen Körper 55, bei dem die Stege 49 in den Führungsnuten 57 und die Greifansätze 24 in den Spannnuten 56 und 56' geführt sind, kommen die Greifhaken 60 zum Eingreifen in die Ausnehmungen 25.

Das seitliche Aufschieben erfolgt bis zur Anlage der Stirnseiten der Stege 49 an axialen Enden der Führungsnuten 57. Durch Verdrehen des Drehantriebs 59 werden die Spannbacken 58 und 58' radial nach innen bewegt und die Halteringe 16 und 17 derart elastisch verformt, daß die Montageeinheit 48 mit der Spannvorrichtung 54 in die Flugzeugachse 1 eingeführt werden kann. Dies erfolgt bis zum Anschlagen der einen Anschlag 61 bildenden radialen Erweiterung des zylindrischen Körpers 55 an der Mündungsöffnung 5. Damit ist die exakte Positionierung der Halteringe 16 und 17 in der Flugzeugachse 1 erreicht. Durch Zurückdrehen des Drehantriebs 59 und axiales Herausziehen der Spannvorrichtung 54 aus der Flugzeugachse 1 ist die Montageeinheit 48 eingebaut. Nun erfolgt das bereits vorbeschriebene Entfernen der Einbaulehren 47 und das Einbauen der mit den Trägerelementen 29 und 30 versehenen Schubspannungsmesser 14 von der Mündungsöffnung 5 her.

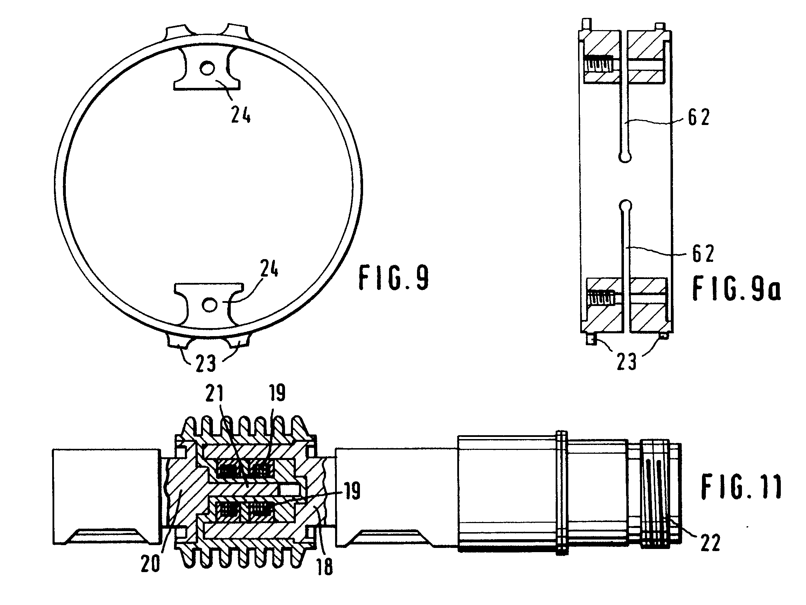

Der in Figur 9 und 9a dargestellte Kabelführungsring 10 ist im Prinzip genauso aufgebaut und wird auf die gleiche Weise eingesetzt wie die Halteringe 16 und 17. Er besitzt ebenfalls Greifansätze 24 und Halteansätze 23. Der Kabelführungsring 10 weist in zwei Ebenen im axialen Abstand Halteansätze 23 auf. Um eine Entkopplung der beiden Ebenen der Halteansätze 23 zu erreichen, ist der Kabelführungsring 10 durch radiale Schlitze 62 zu zwei axial nebeneinanderliegenden Teilringen weitgehend getrennt.

**Patentansprüche**

1. Halteeinrichtung mit zwei in einem axialen Abstand zueinander angeordneten Halteringen (16,17); zur Befestigung eines elektrischen Wandlers in einem rohrförmigen Bauteil, insbesondere eines Schubspannungsmessers mit Spulenteil und Scheibenteil in einer Flugzeugachse; wobei die Halteringe (16,17) radial federnd und mit geringerem Außendurchmesser als dem Innendurchmesser des rohrförmigen Bauteils ausgebildet sind und jeweils radial hervorstehende unter federnder Vorspannung an der Innenwand des rohrförmigen Bauteils kraftschlüssig abstützbare Halteansätze (23) aufweisen und wobei die Halteringe (16,17) Trägerteile (28,28') für den elektrischen Wandler besitzen, dadurch gekennzeichnet, daß die Halteringe (16,17) im Bereich der Halteansätze (23) jeweils radial nach innen ragende Greifansätze (24) besitzen, wobei die Halteringe (16,17) mittels einer an den Greifansätzen (24) angreifbaren Spannvorrichtung elastisch so weit zusammendrückbar sind, daß sie in das rohrförmige Bauteil einsetzbar sind.

2. Einrichtung nach Anspruch 1, dadurch gekennzeichnet, daß die Halteringe (16,17) zwei Paare von um 180° zueinander angeordneten Halteansätzen (23) geringer axialer Erstreckung aufweisen.

3. Einrichtung nach Anspruch 2, dadurch gekennzeichnet, daß die Greifansätze (24) auf der Innenseite der Halteringe (16, 17) gegenüber den Halteransätzen, (23) angeordnet sind.

4. Einrichtung nach einem der Ansprüche 1 bis 3, dadurch gekennzeichnet, daß die Halteringe (16, 17) innenseitig je zwei Trägerteile (28, 28') besitzen, die um 90° versetzt zu den Greifansätzen (24) angeordnet sind.

5. Einrichtung nach Anspruch 4, dadurch gekennzeichnet, daß die Trägerteile (28, 28') an den Halteringen (16, 17) angeformt sind.

6. Einrichtung nach einem der Ansprüche 1 bis 5, dadurch gekennzeichnet, daß die Spulenteile (18) und die Scheibenteile (20) direkt mit den Trägerteilen (28, 28') verbunden sind.

7. Einrichtung nach einem der Ansprüche 1 bis 5, dadurch gekennzeichnet, daß die Spulenteile (18) und die Scheibenteile (20) mittels zwischengeschalteter Trägerelemente (29, 30) mit den Trägerteilen (28, 28') verbunden sind.

8. Einrichtung nach Anspruch 7, dadurch gekennzeichnet, daß an den Trägerteilen (28, 28') je eine sich in einer Ebene senkrecht zur Längserstreckung des rohrförmigen Bauteils (1) erstreckende Führungsnut (23) für einen an den Trägerelementen (29, 30) angeformten Führungsansatz (36, 36') ausgebildet ist.

9. Einrichtung nach Anspruch 8, dadurch gekennzeichnet, daß die Führungsnut (31) und der Führungsansatz (36, 36') im Querschnitt V-förmig ausgebildet sind.

10. Einrichtung nach Anspruch 9, dadurch gekennzeichnet, daß der Führungsansatz (3, 36') einen parallel zur Führungsnut (31) verlaufenden. zum Boden der Führungsnut hin mündenden Schlitz (37) aufweist.

11. Einrichtung nach einem der Ansprüche 7 bis 10, dadurch gekennzeichnet, daß die Tragelemente (29, 30) sich parallel zur Längsachse des rohrförmigen Bauteils (1) erstreckende Ausnehmungen (38, 39) aufweisen und mittels in Gewindebohrungen (32, 33) eingreifenden Befestigungsschrauben (40, 41) an den Trägerteilen (28, 28') befestigt sind.

12. Einrichtung nach Anspruch 11, dadurch gekennzeichnet, daß die Ausnehmungen (38, 39) als Langlöcher mit gleicher Erstreckungsrichtung wie die Führungsnuten (31) ausgebildet sind.

13. Verwendung einer Spannvorrichtung zum radial nach innen Verspannen einer Halteeinrichtung nach einem der vorhergehenden Ansprüche, dadurch gekennzeichnet, daß zwei gegenläufig radial bewegbare Spannbacken (58,58') an ihren radial nach außen gerichteten Enden etwa in Umfangsrichtung gerichtete Greifhaken (60) besitzen, durch die jeweils Greifansätze (24) von Halteringen (16,17) hintergriffen werden.

14. Verwendung nach Anspruch 13, dadurch gekennzeichnet, daß die Spannbacken (58, 58') parallel zueinander bewegbar sind.

15. Verwendung nach Anspruch 14, dadurch gekennzeichnet, daß zwischen zwei gleichsinnig bewegbaren Spannbacken (28) ein gegenläufig bewegbarer Spannbacken (28') angeordnet ist.

16. Verwendung nach einem der Ansprüche 13 bis 15, dadurch gekennzeichnet, daß zwei eine Baueinheit bildende synchron bewegbare Spannvorrichtungen in einem dem axialen Abstand der Halteringe (16, 17) entsprechenden Abstand ihrer Spannbacken (58, 58') angeordnet sind.

17. Verwendung nach Anspruch 16, dadurch gekennzeichnet, daß die Baueinheit einen die Einführbewegung der Baueinheit in ein rohrförmiges Bauteil (1) begrenzenden Anschlag (61) aufweist.

18. Verwendung einer Einbaulehre zum Einbau einer Halteeinrichtung nach einem der Ansprüche 1-12 in ein rohrförmiges Bauteil, dadurch gekennzeichnet, daß jeweils mit Greifansätzen (24) versehene Halteringe (16,17) durch die Einbaulehre entsprechend ihrer Einbaulage zu einer korrekt einander zugeordneten Montageeinheit (48) verbunden werden.

19. Verwendung nach Anspruch 18, dadurch gekennzeichnet, daß die Einbaulehre (47) zwei miteinander verbundene Befestigungsansätze (50, 51) aufweist, die an den der Montageeinheit (48) des rohrförmigen Bauteils (1) zugewandten Seiten der Halteringe (16, 17) lösbar befestigbar sind.

20. Verwendung nach Anspruch 18, dadurch gekennzeichnet, daß die Einbaulehre (47) an zwei axial einander zugeordneten Trägerteilen (28, 28') der Halteringe (16, 17) befestigbar sind.

21. Verwendung nach Anspruch 20, dadurch gekennzeichnet, daß die Einbaulehre (47) mit den Führungsansätzen (36) der Trägerelemente (29, 30) entsprechenden Führungsansätzen (36') versehen und mittels in die Gewindebohrungen (32, 33) der Halteringe (16, 17) einschraubbaren Befestigungsschrauben (52, 53) an den Halteringen (16, 17) befestigbar sind.

## Claims

1. Retaining device having two retaining rings (16, 17) arranged at an axial distance from one another for mounting an electrical transducer in a tubular component, in particular a shearing stress meter with a coil part and a disc part on an aircraft axis, the retaining rings (16, 17) being constructed in a radially resilient fashion and with a smaller outside diameter than the inside diameter of the tubular component and having retaining lugs (23) that can each be supported non-positively in a radially projecting fashion under resilient pretensioning on the inner wall of the tubular component, and the retaining rings (16, 17) having support parts (28, 28') for the electrical transducer, characterised in that in the region of the retaining lugs (23) the retaining rings (16, 17) each have gripping lugs (24) projecting radially inwards, it being possible by means of a clamping device that can act on the gripping lugs (24) for the retaining rings (16, 17) to be pressed together elastically so far that they can be inserted into the tubular component.

2. Device according to Claim 1, characterised in that the retaining rings (16, 17) have two pairs of retaining lugs (23) of small axial extent arranged at 180° to one another.

3. Device according to Claim 2, characterised in that the gripping lugs (24) are arranged on the inside of the retaining rings (16, 17) opposite the retaining lugs (23).

4. Device according to one of Claims 1 to 3, characterised in that on the inside the retaining rings (16, 17) each have two support parts (28, 28') which are arranged offset by 90° with respect to the gripping lugs (24).

5. Device according to Claim 4, characterised in that the support parts (28, 28') are integrally formed on the retaining rings (16, 17).

6. Device according to one of Claims 1 to 5, characterised in that the coil parts (18) and the disc parts (20) are directly joined to the support parts (28, 28').

7. Device according to one of Claims 1 to 5, characterised in that the coil parts (18) and the disc parts (20) are joined to the support parts (28, 28') by means of interposed support elements (29, 30).

8. Device according to Claim 7, characterised in that a guide groove (23) for a guide lug (36, 36') integrally formed on the support elements (29, 30) and extending in a plane perpendicular to the longitudinal extent of the tubular component (1) is constructed on each of the support parts (28, 28').

9. Device according to Claim 8, characterised in that the guide groove (31) and the guide lug (36, 36') are constructed with a V-shaped cross-section.

10. Device according to Claim 9, characterised in that the guide lug (36, 36') has a slot (37) extending parallel to the guide groove (31) and opening towards the bottom of the guide groove.

11. Device according to one of Claims 7 to 10, characterised in that the support elements (29, 30) have cutouts (38, 39) extending parallel to the longitudinal axis of the tubular component (1), and are fastened to the support parts (28, 28') by means of fastening screws (40, 41) engaging in threaded bores (32, 33).

12. Device according to Claim 11, characterised in that the cutouts (38, 39) are constructed as longitudinal holes extending in the same direction as the guide grooves (31).

13. Use of a clamping device for clamping radially inwards a retaining device according to one of the preceding claims, characterised in that at their radially outwardly directed ends two clamping jaws (58, 58') that can be moved radially in opposite directions have gripping hooks (60) directed approximately in the circumferential direction, by means of which gripping lugs (24) are engaged behind in each case by retaining rings (16, 17).

14. Use according to Claim 13, characterised in that the clamping jaws (58, 58') can be moved parallel to one another.

15. Use according to Claim 14, characterised in that a clamping jaw (28') that can be moved in the opposite direction is arranged between two clamping jaws (28) that can be moved in the same direction.

16. Use according to one of Claims 13 to 15, characterised in that two synchronously moveable clamping devices forming a constructional unit are arranged, the distance of their clamping jaws (58, 58') corresponding to the axial distance of the retaining rings (16, 17).

17. Use according to Claim 16, characterised in that the constructional unit has a stop (61) limiting the insertion movement of the constructional unit into the tubular component (1).

18. Use of a mounting gauge to mount a retaining device according to one of Claims 1 - 12 into a tubular component, characterised in that retaining rings (16, 17) each provided with gripping lugs (24) are joined by means of the mounting gauge in accordance with their mounting position to form a correctly mutually coordinated mounting unit (48).

19. Use according to Claim 18, characterised in that the mounting gauge (47) has two fastening lugs (50, 51) joined to one another which can be fastened detachably to the sides of the retaining rings (16, 17) facing the mounting unit (48) of the tubular component (1).

20. Use according to Claim 18, characterised in that the mounting gauge (47) can be fastened detachably to two mutually axially coordinated support parts (28, 28') of the retaining rings (16, 17).

21. Use according to Claim 20, characterised in that the mounting gauge (47) is provided with guide lugs (36') corresponding to the guide lugs (36) of the support elements (29, 30), and can be fastened to the retaining rings (16, 17) by means of fastening screws (52, 53) that can be screwed into the threaded bores (32, 33) of the retaining rings (16, 17).

**Revendications**

1. Dispositif de fixation, comportant deux couronnes (16, 17) de retenue disposées à une certaine distance axiale l'une de l'autre et destiné à fixer un transducteur électrique dans un élément tubulaire, notamment un appareil de mesure de la tension de cisaillement, comportant un élément porte-bobines et un élément à disque, dans un essieu d'avion, les couronnes (16, 17) de retenue pouvant céder élastiquement dans le sens radial et ayant un diamètre extérieur plus faible que le diamètre intérieur de l'élément tubulaire et comportant des pattes (23) de retenue qui en font saillie radialement et peuvent être appliquées positivement, sous l'effet d'une contrainte élastique initiale contre la paroi intérieure de cet élément tubulaire, lesdites couronnes (16, 17) comportant des pattes ((28, 28') de support du transducteur électrique, dispositif caractérisé en ce que les couronnes (16, 17) de retenue comportent, à hauteur des pattes (23) de retenue, des pattes (24) de saisie partant radialement vers l'intérieur, ces couronnes (16, 17) pouvant, au moyen d'un dispositif de serrage en prise avec ces pattes (24) de saisie, être élastiquement comprimées, suffisamment pour pouvoir être introduites dans l'élément tubulaire.

2. Dispositif selon la revendication 1, caractérisé en ce que les couronnes (16, 17) de retenue comportent, à 180° l'un de l'autre, deux couples de pattes (23) de retenue ayant une faible épaisseur axiale.

3. Dispositif selon la revendication 2, caractérisé en ce que les pattes (24) de saisie sont disposées vis-à-vis des pattes (23) de retenue, du côté intérieur des couronnes (16, 17) de retenue.

4. Dispositif selon l'une des revendications 1 à 3, caractérisé en ce que chacune des couronnes (16, 17) de retenue comporte intérieurement des pattes (28, 28') de support, qui sont décalées de 90° par rapport aux pattes (24) de saisie.

5. Dispositif selon la revendication 4, caractérisé en ce que les pattes (28, 28') de support sont façonnées sur les couronnes (16, 17) de retenue.

6. Dispositif selon l'une des revendications 1 à 5, caractérisé en ce que les éléments (18) porte-bobines et (20) à disque sont fixés directement aux pattes (28, 28') de support.

7. Dispositif selon l'une des revendications 1 à 5, caractérisé en ce que les éléments (18) porte-bobines et (20) à disque sont fixés aux pattes (28, 28') de support au moyen d'éléments (29, 30) de support.

8. Dispositif selon la revendication 7, caractérisé en ce qu'une rainure (31) de guidage d'une nervure (36, 36') de guidage des éléments (29, 30) de support, est formée dans un plan perpendiculaire à la longueur de l'élément tubulaire (1) sur chacune des pattes (28, 28') de support.

9. Dispositif selon la revendication 8, caractérisé en ce que la rainure (31) de guidage et la nervure (36, 36') de guidage ont (chacune) une section droite en V.

10. Dispositif selon la revendication 9, caractérisé en ce que la nervure (36, 36') présente une fente (37) parallèle à la rainure (31) de guidage et débouchant vers le fond de cette rainure.

11. Dispositif selon l'une des revendications 7 à 10, caractérisé en ce que les éléments (29, 30) de support comportent des évidements (38, 39) parallèles à l'axe longitudinal de l'élément tubulaire (1) et sont fixés aux pattes (28, 28') de support au moyen de vis (40, 34), qui sont vissées dans des trous taraudés (32, 33).

12. Dispositif selon la revendication 11, caractérisé en ce que les évidements (38, 39) ont la configuration de boutonnières dont la grande dimension a la même orientation que les rainures (31) de guidage.

13. Utilisation d'un dispositif de serrage pour déformer radialement vers l'intérieur un dispositif de fixation selon l'une des revendications précédentes, caractérisée en ce que deux mâchoires (58, 58') de serrage, pouvant être déplacées radialement en sens inverses, présentent à leur extrémité radialement extérieure des crampons (60) orientés dans le sens de la périphérie, qui saisissent par derrière des pattes (24) de saisie respectives de couronnes (16, 17) de retenue.

14. Utilisation selon la revendication 13, caractérisée en ce que les mâchoires (58, 58') peuvent être déplacées parallèlement l'une à l'autre.

15. Utilisation selon la revendication 14, caractérisée en ce qu'une mâchoire (58'), pouvant être déplacée dans le sens opposé, est disposée entre deux mâchoires (58) se déplaçant dans le même sens.

16. Utilisation selon l'une des revendications 13 à 15, caractérisée en ce que deux dispositifs de serrage, pouvant être actionnés en synchronisme et formant un ensemble, sont disposés de manière que leurs mâchoires (58, 58') soient écartées d'une distance correspondant à l'écartement axial des couronnes (16, 17) de retenue.

17. Utilisation selon la revendication 16, caractérisée en ce que l'ensemble formé par les deux dispositifs de serrage comporte une butée (61) limitant l'amplitude du mouvement d'introduction de cet ensemble dans l'élément tubulaire (1).

18. Utilisation d'un gabarit de montage pour monter un dispositif de fixation selon l'une des revendications 1 à 12 dans un élément tubulaire, utilisation caractérisée en ce que des couronnes (16, 17) de retenue, comportant chacune des pattes (24) de saisie, sont reliées par l'entremise de gabarits, conformément à leur position de montage, en formant un ensemble ou module (48) de montage qui les associe correctement l'une à l'autre.

19. Utilisation selon la revendication 18, caractérisée en ce que le gabarit (47) de montage comporte deux épaulements (50, 51) de fixation reliés l'un à l'autre, qui peuvent être fixés amoviblement, aux côtés des couronnes (16, 18) de retenue tournés vers l'ensemble (48) de montage de l'élément tubulaire (1).

20. Utilisation selon la revendication 18, caractérisée en ce que les gabarits (47) de montage peuvent être fixés à deux pattes (28, 28') de support coopérant axialement avec des couronnes (16, 17) de retenue.

21. Utilisation selon la revendication 20, caractérisée en ce que les gabarits (47) de montage portent des nervures (36') de guidage correspondant aux nervures (36) de guidage des éléments (29, 30) de support et peuvent être fixés aux couronnes (16, 17) de retenue au moyen de vis (52, 53) vissées dans les trous taraudés (32, 33) de ces couronnes (16, 17).

FIG.1

# FIG. 1a

# FIG. 2

# FIG. 2a

FIG.2b

FIG.2c

FIG.3

FIG.3a

FIG.3b

FIG.3c

FIG.4

FIG.4a

FIG.4b

FIG.4c

FIG.5

FIG.5a

FIG.5b

FIG.5c

EP 0 232 535 B1

FIG.6

FIG.6a

FIG.6b

16

FIG. 6c

FIG. 8a

FIG. 8

FIG. 7

FIG. 8b

FIG. 8c

FIG.9a

FIG.9

FIG.11

FIG. 10